# EUROPEAN PATENT SPECIFICATION

(11) **EP 1 488 578 B1**
(45) Date of publication and mention of the grant of the patent: **25.02.2009**
(21) Application number: 02717255.0
(22) Date of filing: 28.03.2002
(51) Int. Cl.: H04L 12/56, H04L 29/06

(54) **METHOD AND SYSTEM FOR RESERVING RESOURCES WITHIN AN IP-NETWORK**
VERFAHREN UND SYSTEM ZUM RESERVIEREN VON BETRIEBSMITTELN IN EINEM IP-NETZWERK
PROCEDE ET SYSTEME POUR RESERVER DES RESSOURCES DANS UN RESEAU INTERNET

(43) Date of publication of application: 22.12.2004
(73) Proprietor: Operax AB, 977 75 Luleå (SE)
(72) Inventor: JOHANSSON, Joachim, S-977 52 Lulea (SE); NORRGARD, Joakim, S-972 32 Lulea (SE)
(74) Representative: Holmberg, Nils Anders Patrik
(86) International application number: PCT/SE2002/000618
(87) International publication number: WO 2003/084157

(56) References cited:
- EP-A2- 0 843 501
- WO-A1-02/21797
- WO-A1-02/056564
- US-A1- 2001 032 262
- SCHELEN O. ET AL.: 'Performance of QoS agents for provisioning network resources' PROCEEDINGS OF IWQOS'99 31 May 1999 - 04 June 1999, LONDON, pages 17 - 26, XP002905426

## Description

### Field of the invention

The present invention relates to an Internet Protocol (IP) network.

In particular, it relates to a method, system, and resource manager for reserving resources within said IP network

### Background of the invention

The primary goal when the Internet Protocols were designed was to provide an effective technique for interconnecting existing networks. Other important goals were survivability in case of failure and generality in supporting various services and applications. To reach these goals, the IP protocol was designed to provide a connectionless datagram network that does not require signalling and per-flow forwarding state in network elements. It has turned out that the architecture scales to large networks and supports applications making many end-to-end connections (e.g. the World Wide Web).

One design trade-off made to enable interconnection was to support only best-effort service at the network level and rely on endpoint functionality to obtain various levels of service. Best-effort service provides adequate support for traditional data applications that can tolerate delay, loss and varying throughput along the path. However, in networks carrying high loads of traffic, this type of service is often inadequate for meeting the demands of applications that are more sensitive to packet loss and delay (e.g. telephony, video on demand, multimedia conferencing, etc.).

Traditionally, demanding real-time applications have been built on networks that are vertically optimised for the particular application. This design principle results in networks that are efficient for their purpose, but do not easily support new applications and are in many cases incapable of efficiently multiplexing applications with varying resource demands. It has turned out that the cost of running several different networks in parallel is high.

IP was from the beginning designed to be a general communication solution. IP technology is now recognised to be cheap and appropriate for supporting both traditional data applications and delay-sensitive real-time applications. To provide expected service for real-time applications, logically (and physically) separate IP networks are used. Each IP network serves only a subset of sensitive applications (e.g. IP telephony) with quite predictable resource requirements. By limiting the range of applications, the total resource demand is predictable, so that the network can be dimensioned using the same traffic models as are used for vertically optimised networks. The benefit of cheap IP equipment is obtained without requiring support for dynamic service provisioning in the IP technology.

Network operators now aim at cutting the overhead cost of maintaining several parallel networks. One current trend is to simplify the infrastructure by running all kinds of applications, with various network service demands, in the same logical IP network (i.e. the Internet). This means that the application heterogeneity in IP networks is increasing.

Wireless access technologies may incur bottlenecks at the edges of the network.
One trend is that wireless access technologies for global-area licensed-bands (e.g. GSM, GPRS, UMTS) are migrating from being purely connection-oriented towards applying "IP all the way". These networks will, even in the next generation, be relatively resource-constrained compared with the wired IP networks. Hand-units in these networks traditionally provide real-time applications for human interaction (e.g. voice), but they are now migrating to providing multiple applications.
In addition to application heterogeneity and link heterogeneity, the user community is becoming more heterogeneous in terms of service expectations and willingness to pay for the service (e.g. professional users and home entertainment users).
All these trends point towards the Internet becoming a ubiquitous multi-service network. Consequently, there are strong commercial reasons for network operators and equipment providers to offer Quality-of-Service (QoS) differentiation in IP networks.

In the research and standardisation bodies the development of QoS support has progressed from providing signalled solutions for the Internet (somewhat resembling the solutions used in vertical networks) to now recognising that more stateless solutions are favourable. RSVP (Resource Reservation Protocol) is the signalling protocol standardised to set up per-flow quality of service in routers supporting IntServ (Integrated Services) along the path. IntServ is described in Braden et Al, Integrated Services in the Internet Architecture: an Overview, IETF, RFC1633. Each router along the path performs admission control and then recognises the individual application data streams to provide the service expected. It is argued that this model is too complex and does not scale enough to be used in the backbone of the Internet. Others argue that the model scales well enough to be used close to the edges of the network.

The scalability problems of per-flow QoS management in routers have resulted in a new approach being taken in the IETF, known as the differentiated services architecture described in Blake et Al, An architecture for Differentiated Services, IETF, RFC2475. The objective is to provide scalable QoS support by avoiding per-flow state in routers. The basic idea is that IP packet headers include a small label (known as the diffserv field) that identifies the treatment (per-hop behaviour) that packets should be given by the routers. Consequently, core routers are configured with a few forwarding classes and the labels are used to map packets into these classes. The architecture relies on packet markers and policing functions at the boundaries of the network to ensure that the intended services are provided.

One advantage of differentiated services is that the model preserves the favourable properties that made the Internet successful; it supports scalable and stateless forwarding over interconnected physical networks of various kinds. The standard model is, however, limited to differentiated forwarding in routers and therefore the challenge lies in providing predictable services to end users.

Qualitative services (relatively better than best-effort services, but depending on where the traffic is sent and on the load incurred by others at the time) can be provided by relying only on DiffServ support in routers and resource management mechanisms for semi-static admission control and service provisioning.
To provide quantitative (minimum expectation) service, resources must be dynamically administrated by the resource management mechanisms and involve dynamic admission control to make sure that there are sufficient resources in the network to provide the services committed.

### The resource manager

The entity performing dynamic admission control is here called a resource manager as e.g. described in Wolf, L.C., Delgrossi, L., Steinmetz, R., Schaller, S., Wittig, H., "Issues of Reserving Resources in Advance", IBM European Network Center Heidelberg, TR 43.9503, 1995. This entity keeps track of the available resources and performs admission control on incoming requests for resources from clients. To perform the admission control the resource manager also stores a history of previously admitted resource reservations. The resource manager takes the decision to admit a new request for resources based on the total amount of available resources, the amount currently reserved by previously reservations and the amount of resources requested. The resources may or may not be scheduled over time. One request may involve admission control on multiple resource repositories that may consist of different types of resources. Bandwidth is the most common type of managed resource.

There are specific requirements for resource management mechanisms. To provide service to end users, they must be aware of network resources and may schedule them for the committed service at any granularity (e.g. for a port range, for aggregate traffic between a pair of subnets, etc). The mechanisms should provide accurate resource control both in leaf domains and in core domains. In leaf domains there may be requirements for very fine granular resource control (e.g. per application data stream), especially at licensed band wireless access where bandwidth is so expensive that spectrum efficiency is the overall goal. The performance must also be sufficient to handle mobility and frequent hand-over.

In core domains, dynamic aggregated resource management (e.g. per destination domain, per port range for IP telephony, etc.) may be provided for scalability reasons. Internet Service Providers (ISPs) need support for negotiating bulk bandwidth with each other by using reservations in advance and time-dependent contracts (e.g. time of day, day of week, etc.) as described in C. Chuah, L. Subramanian, R. Katz, and A. Joseph. "QoS provisioning using a clearing house architecture", In Proceedings of IWQoS 2000, Pittsburgh, PA, June 2000. In enterprise networks, there are often well-provisioned LANs and bottleneck leased lines to interconnect sites. They need support for deploying new internal services (e.g. multimedia conferencing) that require certain amounts of resources, and for controlling the resource requirements for these applications must be controlled to avoid excessive negative impact on other traffic.

### Handling immediate open-ended requests

Many applications, such as IP-telephony, are based on immediate (instantaneous) demands for resources. These applications are also often open-ended in their nature, i.e. the duration of the session is unknown when the resources are requested (e.g. IP-telephony). Reservations that are desired immediately are from now on referred to as immediate reservations and reservations where the duration is not known on beforehand is referred to as open-ended reservations. Thus reservations that are desired "from now on" are referred to as immediate open-ended reservations.

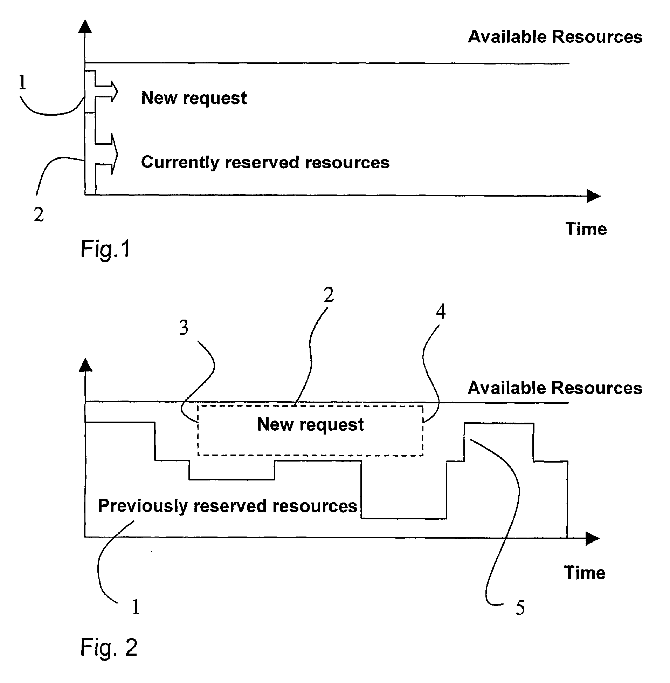

To perform admission control in a system with only this kind of applications, as in **Figure 1** the resource manager needs only to keep track of the current sum of reserved resources (2) to investigate if a new request (1) is allowed to be admitted within the available resources. Notice that in this system there is no need to schedule resources over time (only a counter is needed) and the clients will request resources at the time they are needed. All graphs in the accompanying drawings have resources on the vertical axis and time on the horizontal axis.

### Scheduling resources over time

By being able to make reservations in advance, clients can more efficiently plan their network activities and be assured in advance that they will have access to the claimed resources. Reservations made in advance are often time-limited so they can be scheduled over time as described in D. Ferrari, A. Gupta, and G. Ventre. Distributed advance reservation of real-time connections. In Proceedings of NOSSDAV, Lecture Notes in Computer Science, pages 15-26, Durham, New Hampshire, April 1995. Springer.

Thus, the start-time and the stop-time (or alternatively the duration) is often known and these reservations are referred to as in-advance reservations. Notice that the start-time may be very soon in the future (even immediately). In-advance reservations are especially essential for multi-party meetings (e.g. meetings, conferences, lectures, etc.) or for other planned events such as sport-events etc. to make sure that the resources will be available at the time they are required as e.g. described in S. Bersson, R. Lindell and R. Braden, An architecture for advance reservations in the internet. Technical Report, USC Information Sciences Institute, July 1998. Requesting large amounts of resources over long distances with immediate admission would probably fail when resources are scarce, which would be very disturbing.

Network operators can manually or automatically predict aggregated resource requirements over time and more accurately negotiate long-term aggregate resources between different domains. Even if end users mostly make immediate requests, operators typically plan ahead by negotiating trunk bandwidth with their neighbours. This typically involves scheduling resources over time so new contracts can start at the point when current contracts expire. Contracts may also concern aggregate bandwidths that vary over time (e.g. over the hours of the day or days of the week). Having support for scheduling resources over time is thus crucial for the ability to efficiently providing predictable services over multiple domains and time zones.

The process of scheduling reservations over time is quite straightforward. As shown in **Figure 2**, it is a two-dimensional problem involving resource and time. The admission control involves fitting boxes (2) in a two-dimensional time-resource diagram. The resource manager must keep track of the previously reserved resources (1) over time and see if the new request for resources (2) can be admitted. In this case the request is constrained by a start-time (3) and a stop-time (4) and the height of the box represents the amount of resources that is requested. If there are enough available resources all the time from the start-time to the stop-time (in all affected resource repositories) the request is admitted.

In a system with only constrained reservations with a predefined duration all admitted reservations are set aside and the client will be guaranteed access to the resources as long as the available resources does not change after the reservations was admitted.

### State of the art

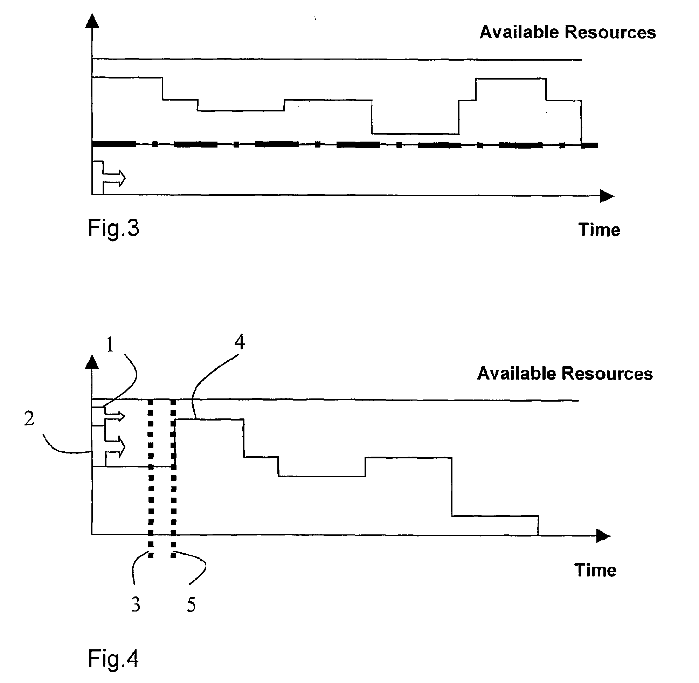

The most well known architectures for providing QoS over the Internet do not include reservations in advance. The integrated services (IntServ) architecture uses the RSVP protocol to set up reservations on demand when the resources are required. Most architectures that support in-advance reservations do this by partitioning the resources so that one part of the resources is dedicated for immediate open-ended use (**Figure 1**), and another part is used for time-limited in-advance reservations (**Figure 2**). By partitioning the resources the available resources may not be shared between open-ended and in-advance reservations and the utilisation will be low. As shown in **Figure 3** the resources reserved for the open-ended reservations in the lower part of the figure may not be used for in-advance reservations. The utilisation may be increased slightly by allowing dynamic adjustments of the partitioning level. Notice that this method can be viewed as booking the open-ended reservations using an infinite duration even though the session might not carry on more than a couple of minutes.

One method of mixing immediate open-ended reservations with time-limited in-advance reservations is developed and described in Olov Schelén, Quality of Service Agents in the Internet, Doctoral Thesis, Department of Computer Science and Electrical Engineering, Division of Computer Communication, Luleå University of Technology, Luleå, 1998. In this method, the admission control for immediate open-ended reservations and in-advance reservations was separated but the resources are however shared between the two through signalling information about current bookings. This method is based on statistical predictions of the durations of the immediate open-ended reservations and weighing the risk of having to pre-empt a reservation against the utilisation. This method was optimised to preserve the performance and simplicity of the admission control for immediate open-ended reservations (as in **Figure 1**) by minimising the information that needs to be shared between the two algorithms.

The method described above is illustrated in **Figure 4****.** It is based on monitoring the level of admitted in-advance reservations (4) within a look-ahead time (3) when admitting a new open-ended reservation (1). Hence, it is possible to monitor the future resource utilisation by studying the admitted in advance reservations within the look-ahead time. A new immediate reservation (1) is admitted if there is enough resources available for the total sum of immediate open-ended reservations (1+2) looking a predefined time ahead in the future (3), i.e. the look-ahead time. When making admission control for in-advance reservations the immediate (1 and 2) reservations need not be considered because new in-advance reservations are not admitted within the look-ahead time (3) to protect the previously admitted immediate reservations (1 and 2). The time from making an in-advance reservation until it is to be activated is called the book-ahead time (5), in [1], which is at least the look-ahead time (3).

The main problem with mixing open-ended reservations with in-advance reservations is that the duration of the open-ended reservations is not known on beforehand as described in Greenberg, A. G., R. Srikant and W. Whitt, "Resource Sharing for Book-Ahead and Instantaneous-Request Calls," AT&T Labs, 1997. If the resources are not partitioned infinitely as in **Figure 3****,** there is always a risk of overbooking if the resources are shared, as described in Schill, F. Breiter, and S. Kuhn, "Design and evaluation of an advance reservation protocol on top of RSVP," in Proc. IFIP 4th International Conf. Broadband Communications, Stuttgart, Chapman & Hall, 1998, pp. 23-- 40.

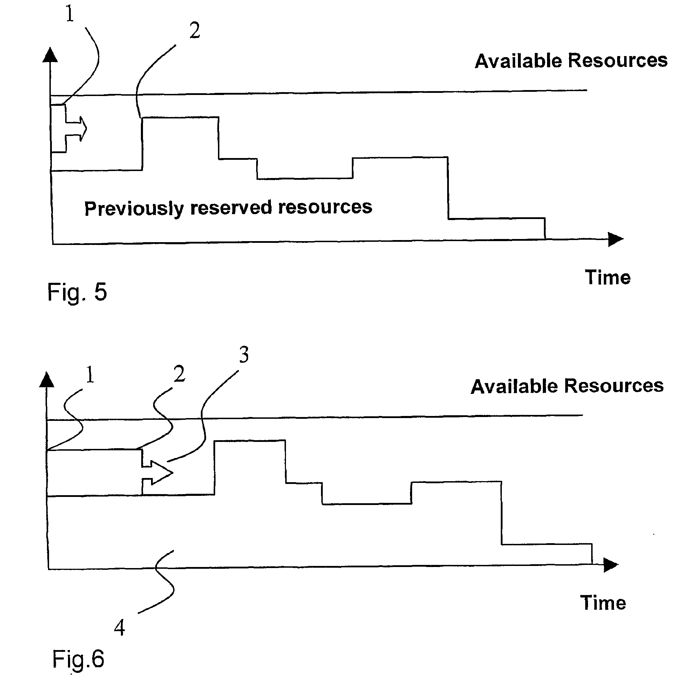

For example, if the open-ended reservation (1) in **Figure 5** lasts longer than the bookings at (2), the resources will be over-booked at (2) and to assure the service for all affected reservations one or more reservations must be pre-empted. There is several ways to choose the reservations to pre-empt based on priority, booking-time or some other policies. In this example the natural decision is to pre-empt the open-ended reservation and favour the reservations made in advance.

In the solution presented by Olov Schelén, (illustrated in **Figure 4**) the risk of having to pre-empt an immediate reservation could be adjusted by adjusting the look-ahead time. The problem with this method is however that there is only one look-ahead time for all reservations, which means that all open-ended reservations have the same risk of pre-emption and the expected duration of all reservations must be the same. Thus this method does not support different types of applications simultaneously having different requirements for the risk of pre-emption and/or having different statistical distributions of the expected duration. A look-ahead adjusted for IP-telephony might be a couple of minutes while for a video-conferencing application should have a considerably longer look-ahead. Even if the expected duration would be the same in different applications one application might require a lower risk of pre-emption and thus require a longer look-ahead than another application that might accept a higher risk of pre-emption in exchange for lower block-rate (more likely to be admitted but also more likely to be pre-empted later).

In this method that is described by Olov Schelén, the reservations made in advance are guaranteed the granted resources as long as available resources do not change while immediate open-ended reservations risk pre-emption. Therefore to secure the resources one must make the reservation in advance and in this method the reservation must also be made at least the look-ahead time in advance (5) in **Figure 4**. Since this method does not support time-limited immediate reservations all immediate reservations will be subject to the risk of pre-emption. Another problem is that in-advance reservations may not be modified within the look-ahead time to protect the immediate open-ended. This also implies that soft-state reservations, which will time-out if they are not refreshed, are not supported if the refresh time is less than the look-ahead time.

EP-A2-843 501 discloses a network able to book ahead resources in the network. The network also comprises means for extending the holding time of a book ahead call. EP-A2-843 501 does not disclose an IP network with resource managers that comprises means for performing the resource reservations.

Thus, an object of the present invention is to provide a method and apparatus for utilising the resources more efficient when reserving resources for immediate and future use.

### Summary of the invention

The above-mentioned object is achieved by the present invention according to the independent claims.

Preferred embodiments are set forth in the dependent claims.

By mixing open-ended reservations with in-advance reservations, by utilising a common pool of resources, the resource utilisation will be high. The method according to the present invention allows support for open-ended reservations as well as in-advance and immediate time-limited reservations wherein the resources are guaranteed. It also allows modification of active and "soon to be active" reservations, which in turn permit soft-state reservations. The invention supports different types of applications with varying time-distributions and varying risk of pre-emption. A new concept of open-ended in-advance reservations is also introduced in the present invention. The present invention supports the possibility to adapt the risk of pre-emption.

The resource manager comprises means for performing the actions as described in the "Resource manager". According to the present invention the resource manager also comprises:
means for reserving resources, means for guaranteeing said resources between said start-time and said stop-time, and means for keeping said resources for the application after said stop-time has expired if said application still needs the resources in order to provide a resource reservation for an open-ended application.

The resource manager may also comprise means for keeping a list of active reservations that have expired said stop-time in order to control the pre-emption of the open-ended reservations if there is not enough available resources.

Furthermore, the resource manager may also comprise means for allowing each application client to set individual start- and stop-time for said application in order to choose said start- and stop-time adapted to said application.

Furthermore, the resource manager may also comprise means for setting individual start- and stop-time for each application in order to choose said start- and stop-time adapted to said application.

Moreover, the resource manager may comprise means for setting said start-time to the current time in order to reserve and guarantee resources immediately.

Moreover, the resource manager may comprise means for setting said stop-time to the current time in order to allocate resources immediately.

Moreover, the resource manager may comprise means for setting said stop-time to infinity in order to guarantee resources during a long time.

In addition, the resource manager may comprise means for basing the charging of said resources on the amount of guaranteed resources.

### Brief description of the appended drawings

**Figure 1** illustrates handling of immediate open-ended resource requests.
**Figure 2** illustrates resource scheduling over time.
**Figure 3** illustrates partitioned resources for open-ended and in-advance reservations.
**Figure 4** shows admission control based on a look-ahead time.
**Figure 5** shows how scheduled in-advance reservations is mixed with open-ended reservations.
**Figure 6** shows an immediate open-ended reservation with a start-time and a stop-time according to the present invention.
**Figure 7** shows open-ended in-advance reservation according to the present invention.
**Figure 8** shows flowchart of the method according to the present invention.

### Detailed description of preferred embodiments

A first preferred embodiment according to the present invention is based on providing the possibility to book open-ended reservations in the same way and from the same repository as the in-advance and immediate time-limited reservations. This is accomplished by introducing a start-time (1) and a stop-time (2) for the open-ended reservations that may or may not be given by the client as shown in **Figure 6**. The open-ended reservation is booked together with the in-advance reservations (4) between the start-time (1) and the stop-time (2) and is thereby also guaranteed the resources between said start-time (1) and said stop-time (2). The difference between a reservation, as in **Figure 2**, and an open-ended reservation according to the present invention is that after the stop-time (2) has expired, the resources that were reserved between the start- and stop-time may still be used. Thus, this allows open-ended applications to reserve resources. The "open-ended behaviour" of the resource request is indicated in **Figure 6** with the arrow (3). After the stop-time (2) has expired, the resources that were reserved are now subject to the risk of being pre-empted. In this solution only open-ended reservations that last longer than the stop-time (2) may be pre-empted.

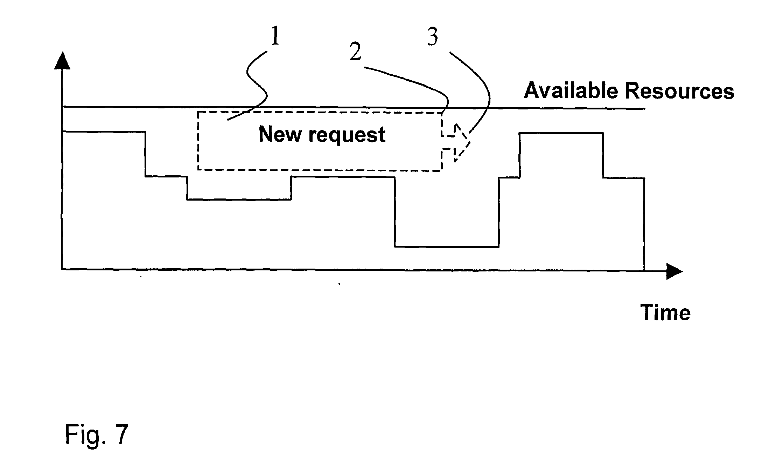

A second preferred embodiment according to the present invention allows open-ended in-advance reservations i.e. an open-ended reservation wherein its start-time is set to a time in the future, as shown in **Figure 7**.

The open-ended in-advance reservation (1) in **Figure 7** is considered as any other in-advance reservation when making the admission control and booking up the resources but after the stop-time (2) has expired the resources are not released, instead the resources may still be utilised as long as the client desires the resources and as long as there are available resources. This kind of reservations is for example useful when booking resources for a video conference that lasts longer than expected or when booking resources for sport events that often last longer than expected. Even video-on-demand applications might last longer than expected if the user is allowed to pause or rewind the movie. By leaving these kinds of bookings open-ended, the resources will not automatically be released when the stop-time has passed.

The resource manager is required to keep a list of all active open-ended reservations where the stop-time has been passed and to verify that there are available resources to keep these reservations as time goes by. If the current available resources become over-booked, pre-emption of one or more clients using resources where stop-time is expired must be performed. In most cases it is natural to pre-empt one of the clients in this list but there may also exist exceptions such as for emergency calls. I.e., if there are cases with high priority (e.g. emergency) calls in the list, it may be suitable to pre-empt another resource instead. the choice is up to the local policy. In the present invention, there is no special treatment of immediate reservations. There is only the concept of time-limited or open-ended reservations and a mix between the two. Making an immediate reservation (from now) using zero duration (start-time = stop-time = now) gives no guaranties (similar to **Figure 5**) and making an immediate reservation with a duration equal to the look-ahead time in **Figure 4** will provide the same result as the described method by Olov Schelén with the respect to be able to guarantee resources within the look-ahead time.

The solution enables the possibility to have an individual start-time and an individual stop-time for each open-ended reservation provided either by the client or as pre-configured values in the resource manager for different applications. Charging may, or may not be based on the amount of guaranteed resources (the duration between the start and stop-times). If the client wants a lower risk of pre-emption he is required to request a resource reservation for a longer duration. On the other hand, a request for a longer duration may not be accepted. Thus, the duration may be chosen with regard to the desired blocking probability, a reservation with shorter duration will more likely be admitted and a reservation with zero duration will always be admitted since no resources are set aside but the risk of pre-emption will then be very high. The present invention supports immediate time-limited reservations, which allows soft-state reservations, and allows guaranteed resources for immediate reservations. A soft-state reservation, is a time-limited reservation that is released after a while, wherein the release is controlled by e.g. a timer. If a client wants to keep a soft-state reservation, continuously repeated refresh operations are required. The difference between a soft-state reservation and an open-ended reservation, is that an open-ended is keeping its resources until they are released by an active action.

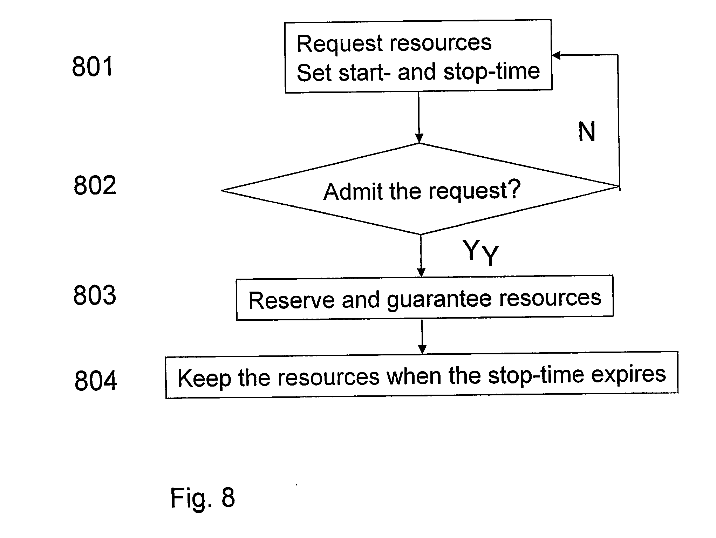

Figure 8 shows a flowchart of a method for reserving resources for an application in an IP-network, according to the invention in a general mode. The resources are reserved and controlled by a resource manager, wherein the resource manager is located within a server or a router within said IP-network.

The method comprises the following steps:
**801.** A client requests a reservation of resources for an application from a resource manager and sets a start-time and stop-time.
**802.** The resource manager either admits or rejects the request.
**803.** If the request is admitted, the resource manager reserves and guarantees resources from the start-time onwards, to the stop-time.
**804.** When the stop-time expires, the reserved resources are kept if said application still needs said reserved resources and if it is enough available resources.

The resource reservation method according to the present invention is implemented by a computer program product, wherein the computer program product may be implemented in a resource manager, wherein the resource manager is located within a router or a server within an IP network.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A method for reserving network resources within an IP network, wherein the resources are reserved by a resource manager for an application or a group of applications, open-ended reservations are mixed with in-advance reservations by utilising a common pool of resources, wherein the open-ended reservations are defined by a start-time and a stop-time, **characterised in that** the method comprises the step of:
- *guaranteeing* (803) said resources between said start-time and said stop-time, and
- *keeping* (804) said resources for the application after said stop-time has expired if said application still needs resources, wherein the resource manager is keeping a list of active reservations that have expired after said stop-time.

2. Method according to claim 1, **characterised in that** all resource reservations are utilising a common pool of resources.

3. Method according to claim 1, **characterised in that** individual start- and stop-time are set for each application by an application client.

4. Method according to claim 1, **characterised in that** individual start- and stop-time are set for each application by the resource manager.

5. Method according to claim 1, **characterised in that** said start-time is set to the current time.

6. Method according to claim 5, **characterised in that** said stop-time is set to the current time.

7. Method according to any of claims 1 and 5, **characterised in that** said stop-time is set to infinity.

8. Method according to claim 1, **characterised in that** charging of said resources is based on the amount of guaranteed resources.

9. Method according to claim 1, **characterised in that** said resources are related to the bandwidth.

10. A computer program product directly loadable into an internal memory of a router or a server within an IP network comprising the software code portions for performing the steps of claims 1-9.

11. A computer program product stored on a computer usable medium, comprising readable program for causing a resource manager in a server or a router within an IP network to perform all the steps of claims 1-9.

12. A resource manager for reserving network resources within an IP network, wherein said resource manager comprises means for reserving resources for an application or a group of applications, open-ended reservations are mixed with in-advance reservations by utilising a common pool of resources, wherein the open-ended reservations are defined by a start-time (1) and a stop-time (2), **characterised in that** said resource manager comprises means for guaranteeing said resources between said start-time (1) and said stop-time (2), and means for keeping said resources for the application after said stop-time has expired if said application still needs the resources wherein said resource manager comprises means for keeping a list of active reservations that have expired after said stop-time.

13. Resource manager according to claim 12, **characterised in that** all resource reservations are utilising a common pool of resources.

14. Resource manager according to claim 12, **characterised in that** said resource manager comprises means for allowing the each application client to set individual start- and stop-time for said application.

15. Resource manager according to claim 12, **characterised in that** said resource manager comprises means for setting individual start- and stop-time for each application.

16. Resource manager according to claim 12, **characterised in that** said resource manager comprises means for setting said start-time to the current time.

17. Resource manager according to claim 16, **characterised in that** said resource manager comprises means for setting said stop-time to the current time.

18. Resource manager according to any of claims 12 and 16, **characterised in that** said resource manager comprises means for setting said stop-time to infinity.

19. Resource manager according to claim 12, **characterised in that** said resource manager comprising means for basing the charging of said resources on the amount of guaranteed resources.

20. Resource manager according to claim 12, **characterised in that** said resources are related to the bandwidth.

## Patentansprüche

1. Verfahren zum Reservieren von Netzwerkressourcen in einem IP-Netzwerk, bei dem die Ressourcen von einem Ressourcen-Manager für eine Applikation oder eine Gruppe von Applikationen reserviert werden und erweiterbare Reservierungen mit Vorlaufreservierungen unter Verwendung eines gemeinsamen Vorrates von Ressourcen gemischt werden, wobei die erweiterbaren Reservierungen durch eine Startzeit und eine Stoppzeit reserviert werden, **dadurch gekennzeichnet, dass** das Verfahren folgende Schritte umfasst:
- Sicherstellen (803) der Ressourcen zwischen der Startzeit und der Stoppzeit und
- Beibehalten (804) der Ressourcen für die Applikation, nachdem die Stoppzeit abgelaufen ist, sofern die Applikation weiterhin Ressourcen benötigt, wobei der Ressourcen-Manager eine Liste aktiver Reservierungen beibehält, die nach der Stoppzeit abgelaufen sind.

2. Verfahren nach Anspruch 1, **dadurch gekennzeichnet, dass** sämtliche Ressourcenreservierungen einen gemeinsamen Vorrat von Ressourcen verwenden.

3. Verfahren nach Anspruch 1, **dadurch gekennzeichnet, dass** eine individuelle Start- und Stoppzeit für jede Applikation durch einen Applikations-Client eingestellt wird.

4. Verfahren nach Anspruch 1, **dadurch gekennzeichnet, dass** die individuelle Start- und Stoppzeit für jede Applikation durch den Ressourcen-Manager eingestellt wird.

5. Verfahren nach Anspruch 1, **dadurch gekennzeichnet, dass** die Startzeit auf die momentane Zeit eingestellt wird.

6. Verfahren nach Anspruch 5, **dadurch gekennzeichnet, dass** die Stoppzeit auf die momentane Zeit eingestellt wird.

7. Verfahren nach einem der Ansprüche 1 und 5, **dadurch gekennzeichnet, dass** die Stoppzeit auf unendlich eingestellt wird.

8. Verfahren nach Anspruch 1, **dadurch gekennzeichnet, dass** das Laden der Ressourcen auf der Menge der sichergestellten Ressourcen basiert.

9. Verfahren nach Anspruch 1, **dadurch gekennzeichnet, dass** sich die Ressourcen auf die Bandbreite beziehen.

10. Computerprogramm-Erzeugnis, das direkt in einen internen Speicher eines Routers oder eines Servers innerhalb eines IP-Netzwerkes geladen werden kann, enthaltend die Softwarecodeabschnitte zum Ausführen der Schritte von Anspruch 1 bis 9.

11. Computerprogramm-Erzeugnis, das auf einem von einem Computer verwendbaren Medium gespeichert ist, enthaltend ein lesbares Programm, das einen Ressourcen-Manager in einem Server oder einem Router innerhalb eines IP-Netzwerkes dazu veranlasst, sämtliche Schritte der Ansprüche 1 bis 9 auszuführen.

12. Ressourcen-Manager zum Reservieren von Netzwerk-Ressourcen innerhalb eines IP-Netzwerkes, wobei der Ressourcen-Manager eine Einrichtung zum Reservieren von Ressourcen für eine Applikation oder eine Gruppe von Applikationen enthält und erweiterbare Reservierungen mit Vorlaufreservierungen mit Hilfe eines gemeinsamen Vorrates von Ressourcen gemischt werden, wobei die erweiterbaren Reservierungen durch eine Startzeit (1) und eine Stoppzeit (2) definiert werden, **dadurch gekennzeichnet, dass** der Ressourcen-Manager eine Einrichtung zum Sicherstellen der Ressourcen zwischen der Startzeit (1) und der Stoppzeit (2) und eine Einrichtung enthält, die die Ressourcen für die Applikation beibehält, nachdem die Stoppzeit abgelaufen ist, sofern die Applikation weiterhin die Ressourcen benötigt, wobei der Ressourcen-Manager eine Einrichtung enthält, die eine Liste von aktiven Reservierungen beibehält, die nach der Stoppzeit abgelaufen sind.

13. Ressourcen-Manager nach Anspruch 12, **dadurch gekennzeichnet, dass** sämtliche Ressourcen-Reservierungen einen gemeinsamen Vorrat von Ressourcen verwenden.

14. Ressourcen-Manager nach Anspruch 12, **dadurch gekennzeichnet, dass** der Ressourcen-Manager eine Einrichtung enthält, die es jedem Applikations-Client gestattet, eine individuelle Start- und Stoppzeit für die Applikation einzustellen.

15. Ressourcen-Manager nach Anspruch 12, **dadurch gekennzeichnet, dass** der Ressourcen-Manager eine Einrichtung enthält, die eine individuelle Start- und Stoppzeit für jede Applikation einstellt.

16. Ressourcen-Manager nach Anspruch 12, **dadurch gekennzeichnet, dass** der Ressourcen-Manager eine Einrichtung enthält, die die Startzeit auf die momentane Zeit einstellt.

17. Ressourcen-Manager nach Anspruch 16, **dadurch gekennzeichnet**, das der Ressourcen-Manager eine Einrichtung zum Einstellen der Stoppzeit auf die momentane Zeit enthält.

18. Ressourcen-Manager nach einem der Ansprüche 12 und 16, **dadurch gekennzeichnet, dass** der Ressourcen-Manager eine Einrichtung zum Einstellen der Stoppzeit auf unendlich enthält.

19. Ressourcen-Manager nach Anspruch 12, **dadurch gekennzeichnet, dass** der Ressourcen-Manager eine Einrichtung enthält, die das Laden der Ressourcen auf die Menge sichergestellter Ressourcen gründet.

20. Ressourcen-Manager nach Anspruch 12, **dadurch gekennzeichnet, dass** sich die Ressourcen auf die Bandbreite beziehen.

## Revendications

1. Procédé pour réserver des ressources de réseau dans un réseau IP, dans lequel les ressources sont réservées par un gestionnaire de ressources pour une application ou un groupe d'applications, des réservations ouvertes sont mélangées à des réservations au préalable en utilisant une réserve commune de ressources, dans lequel les réservations ouvertes sont définies par un temps de démarrage et un temps d'arrêt, **caractérisé en ce que** le procédé comporte les étapes consistant à :
- *garantir* (803) lesdites ressources entre ledit temps de démarrage et ledit temps d'arrêt et
- *conserver* (804) lesdites ressources pour l'application après que ledit temps d'arrêt s'est écoulé si ladite application a encore besoin de ressources, dans lequel le gestionnaire de ressources conserve une liste de réservations actives qui se sont écoulées après ledit temps d'arrêt.

2. Procédé selon la revendication 1, **caractérisé en ce que** toutes les réservations de ressources utilisent une réserve commune de ressources.

3. Procédé selon la revendication 1, **caractérisé en ce qu'**un temps de démarrage et un temps d'arrêt individuels sont définis pour chaque application par un client d'application.

4. Procédé selon la revendication 1, **caractérisé en ce qu'**un temps de démarrage et un temps d'arrêt individuels sont définis pour chaque application par le gestionnaire de ressources.

5. Procédé selon la revendication 1, **caractérisé en ce que** ledit temps de démarrage est défini sur le temps en cours.

6. Procédé selon la revendication 5, **caractérisé en ce que** ledit temps d'arrêt est défini sur le temps en cours.

7. Procédé selon l'une quelconque des revendications 1 et 5, **caractérisé en ce que** ledit temps d'arrêt est défini sur l'infini.

8. Procédé selon la revendication 1, **caractérisé en ce que** la tarification desdites ressources est basée sur la quantité de ressources garanties.

9. Procédé selon la revendication 1, **caractérisé en ce que** lesdites ressources sont relatives à la bande passante.

10. Produit-programme informatique pouvant être chargé directement dans une mémoire interne d'un routeur ou d'un serveur au sein d'un réseau IP comprenant des parties de code logiciel pour mettre en oeuvre les étapes des revendications 1 à 9.

11. Produit-programme informatique stocké sur un support utilisable par un ordinateur, comportant un programme lisible pour forcer un gestionnaire de ressources dans un serveur ou dans un routeur au sein d'un réseau IP à mettre en oeuvre toutes les étapes des revendications 1-9.

12. Gestionnaire de ressources pour réserver des ressources de réseau dans un réseau IP, dans lequel ledit gestionnaire de ressources comporte des moyens pour réserver des ressources pour une application ou un groupe d'applications, des réservations ouvertes sont mélangées à des réservations au préalable en utilisant une réserve commune de ressources, dans lequel les réservations ouvertes sont définies par un temps de démarrage (1) et un temps d'arrêt (2), **caractérisé en ce que** ledit gestionnaire de ressources comporte des moyens pour garantir lesdites ressources entre ledit temps de démarrage (1) et ledit temps d'arrêt (2) et des moyens pour conserver lesdites ressources pour l'application après que ledit temps d'arrêt s'est écoulé si ladite application a encore besoin de ressources, dans lequel le gestionnaire de ressources comporte des moyens pour conserver une liste de réservations actives qui se sont écoulées après ledit temps d'arrêt.

13. Gestionnaire de ressources selon la revendication 12, **caractérisé en ce que** toutes les réservations de ressources utilisent une réserve commune de ressources.

14. Gestionnaire de ressources selon la revendication 12, **caractérisé en ce que** ledit gestionnaire de ressources comporte des moyens pour permettre à chaque client d'application de définir un temps de démarrage et un temps d'arrêt individuels pour ladite application.

15. Gestionnaire de ressources selon la revendication 12, **caractérisé en ce que** ledit gestionnaire de ressources comporte des moyens pour définir un temps de démarrage et un temps d'arrêt individuels pour chaque application.

16. Gestionnaire de ressources selon la revendication 12, **caractérisé en ce que** ledit gestionnaire de ressources comporte des moyens pour définir ledit temps de démarrage sur le temps en cours.

17. Gestionnaire de ressources selon la revendication 16, **caractérisé en ce que** ledit gestionnaire de ressources comporte des moyens pour définir ledit temps d'arrêt sur le temps en cours.

18. Gestionnaire de ressources selon l'une quelconque des revendications 12 et 16, **caractérisé en ce que** ledit gestionnaire de ressources comporte des moyens pour définir ledit temps d'arrêt sur l'infini.

19. Gestionnaire de ressources selon la revendication 12, **caractérisé en ce que** ledit gestionnaire de ressources comporte des moyens pour baser la tarification desdites ressources sur la quantité de ressources garanties.

20. Gestionnaire de ressources selon la revendication 12, **caractérisé en ce que** lesdites ressources sont relatives à la bande passante.
